# EUROPEAN PATENT SPECIFICATION

(11) **EP 2 056 522 B1**
(45) Date of publication and mention of the grant of the patent: **09.08.2017**
(21) Application number: 07119731.3
(22) Date of filing: 31.10.2007
(51) Int. Cl.: H04L 12/14, H04M 15/00

(54) **Mediation of packet-switched calls**
Vermittlung von paketvermittelten Anrufen
Médiation d'appels commutés par paquets

(43) Date of publication of application: 06.05.2009
(73) Proprietor: Comptel Corporation, 00180 Helsinki (FI)
(72) Inventor: Karhunen, Kari, FI-00760, Helsinki (FI); Markkunen, Mikko, FI-00200, Helsinki (FI); Lewis, Richard, FI-03100, Nummela (FI)
(74) Representative: Berggren Oy, Helsinki & Oulu

(56) References cited:
- EP-A- 1 545 114
- US-A1- 2004 015 497
- US-B1- 6 449 618
- ZSEBY S ZANDER G CARLE FRAUNHOFER FOKUS T: "Policy-Based Accounting; rfc3334.txt" IETF STANDARD, INTERNET ENGINEERING TASK FORCE, IETF, CH, October 2002 (2002-10), XP015009098 ISSN: 0000-0003

## Description

### Technical Field

The present invention relates to a method, system and computer program product of constructing CDRs relating to calls made in packet switched communication networks.

### Background Art

Billing in circuit switched networks has been based on the measurements in telephone exchanges. The telephone exchanges interact with each other by using a signaling system, e.g. SS7. Billing solutions used in this kind of networks have been known for a while. At the moment, the circuit switched networks are being supplemented or replaced by packet switched networks, which handle a growing portion of the communications. The packet switched networks are widely standardized by organizations ITU, 3GPP, etc. but they are based on totally different architectures than circuit switched networks. Firstly, in packet switched networks there are much more places than a switch where an event can be generated. Secondly, in packet switched networks there are much more services available than an ordinary telephone call. This leads to situations wherein billing technologies used with circuit switched networks do not work properly or not at all with packet switched networks.

The construction of CDRs is preferably done in an aggregator or correlator of a mediation device, mediation software, mediation component or like in middleware layer between the network elements and Operation and Business Support System (OSS/BSS). Packet switched communication networks and especially some technical implementations and services such like 2.5G, 3G, 4G, Universal Mobile Telecommunications System (UMTS), Wireless Local Area Network (WLAN), Terrestrial Trunked Radio (TETRA), IP Multimedia Subsystem (IMS), Voice over IP (VoIP), IP group calls, Push-To-Talk (PTT), content service sessions, multiplayer interactive game sessions, etc. raise new challenges to mediation solutions to make right and proper billing information in real-time.

Mediation is a process wherein usage data is collected from telecommunication network and delivered to operator's Operation and Business Support System (OSS/BSS). Mediation software collects usage data from network by interfacing various different network elements. The mediation layer then aggregates, correlates, enriches, validates, formats, and/or rates the data so that it is readable by the target OSS/BSS system and it contains all the required information.

Mediation software hides the complexity of the network from the OSS/BSS system by ensuring that the data received by the OSS/BSS system is similar regardless of the network elements the data is coming from. That is, the OSS/BSS has to communicate only with the mediation software, not with several different kinds of network elements.

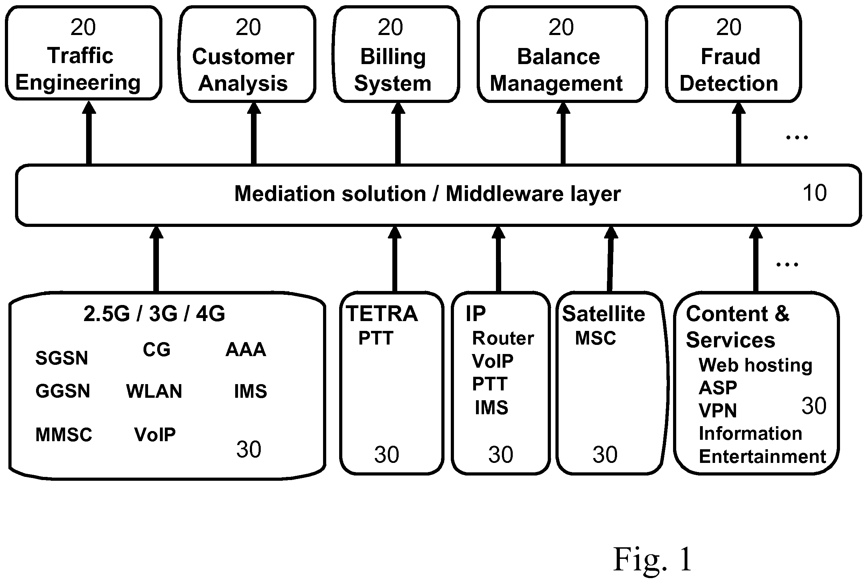

The present invention relates also to mediation methods and systems that have been developed in view of the requirements by handling events in new-generation solutions that are especially designed for continuous streaming mediation, which is also called real-time mediation. Mediation software installations in the past have been batch based, this being also the case with the majority of the installations at the time of filing this application. In a batch-based process, event records are collected in larger entities and processed after certain time intervals. Today new cases emerge that require data being collected, processed and delivered to the destination OSS/BSS as soon as the data is available in the network. Especially the new technologies, services and applications, mainly employed together with packet switched networks generate huge amount of fragmented information relating to an event (e.g. group call, game session, etc.). Real-time mediation offers solution to this problem. One embodiment of this kind of solution is presented in Figure 1.

In the present and emerging communications technologies a billable CDR comprises several information pieces that are generated in the network elements or other instances in the network involved with an event. Furthermore the initiated event data is unstructured and fragmented and it contains often only a partial piece of information needed for a complete CDR. For this reason the mediator is in front of new challenges relating to resources, efficiency and performance.

Traditional event mediation solution contains functionalities like collection of usage data from network elements, aggregation, conversion of data format to unified format, correlation, etc. This all has been ready for years and most likely will be used for years to come.

Traditionally event mediation solution has been evaluated based on following technical criteria: how many network element interfaces it can support, what are the data formats it can read and produce, what is the processing performance of the system, what kind of process management functionalities it provides etc.

Only very rarely event mediation solution has been evaluated from business point view: how much money it can save, how much new revenue it can create, what are the new business models it enables, what kind of value-added information it can produce for operators business processes (e.g. customer care, billing, fraud, statistics).

Actually, business point of view was not very interesting, as billing models were simple and stable, and the source of the billing data was always known. Usage information was used also for other than billing purposes but the purpose and content of usage data was well known and well defined.

Shortly said: traditional event mediation is based on well-known sources of usage data, standard data formats, static billing models and relatively simple processing requirements. The main purpose of event mediation has been to collect data from the network, convert it to business support system format and deliver it to selected destinations.

Traditional event mediation solutions typically have dedicated separate modules for functionalities like aggregation, correlation and duplicate checking. While this works well for standard scenarios, legacy architectures are very inflexible when new functional requirements (that the solution has not been designed for) have to be met. This typically leads to vast changes in existing solution or even complete re-implementation.

The same applicant's former patent application publication WO 2004/095326 presents an over all mediation environment suitable also for real-time mediation.

Also the same applicant's former patent application publication WO 2006/131588 presents a method of processing event records that at least potentially have a mutual relation.

Patent application publication US 2003/0009443 presents an aggregation method for data to be filtered, classified and applied by logical functions without data-specific instructions. This publication teaches one kind of solution for aggregating records in traditional mediation architecture.

Patent application publication US 2004/0008717 presents a fault tolerant correlation engine in telecommunications networks. This publication teaches one kind of solution for monitoring and collecting information of a telephone call.

Patent application publication WO 00/24161 presents a charging method in telecommunications network. This publication teaches one kind of solution for collecting and charging of services used by subscribers.

US 2004/0015497 A1 discloses a flexible event correlation aggregation tool configured to correlate and aggregate usage data from a number of collection points for billing-related purposes.

US-B1-6 449 618 discloses a real-time event processing system (EPS) for processing a sequence of events generated by one or more applications.

### Disclosure of Invention

It is an object of the present invention to provide a new method, system and computer program product for constructing CDRs relating to a packet-switched call on the basis of data received from network elements participating in the call.

The object of the invention is achieved by the method of claim 1 and the system of claim 16, and also by the corresponding computer program product of claim 24. The invention involves analysing at least part of the information content of each of the received data records and responsive thereto, initializing and updating a plurality of simultaneously existing partial records relating to the call in an in-memory database. In the method, a single data record may trigger updating at least two different partial records responsive to the content of a single data record. The CDRs are constructed on the basis of the partial records.

Furthermore, the inventive concept allows several useful and advantageous embodiments, which provide numerous advantages.

An embodiment of the present invention allows generating CDRs on different aspects of an even very complicated call, such as a group call involving several end terminals and using several channels or other network resources. In such an embodiment, an own partial record can be initialized for each of the significant roles in the call, e.g. for each of the end terminals and significant network resources. In an embodiment, such significant network resources include channels, switches and the like resources. This kind of an embodiment is made possible by the analysis of the received event data and the possibility to initialize and update several partial records on the basis of even a single received event data, when necessary.

According to an embodiment of the present invention, the partial records are constructed as separate rows in the in-memory database.

An embodiment of the invention, wherein an own partial record is initialized for each of the terminals participating in the call, allows constructing own CDRs for each of the terminals for their part in the call. This in turn makes it possible to share the costs of a group call between the participating terminals, for instance.

In an embodiment of the invention, wherein the events associated with particular network resources are used to update dedicated partial records, it is possible to monitor the usage and load of critical network resources almost in real time.

As is apparent from the above disclosure, the present invention can be applied in a great variety of applications requiring automatic, fast and accurate service provisioning and activation, network maintenance, network planning and other like.

The present invention is especially suitable for billing calls and services used in packet-switched communication networks. The billing in this case means both pre-paid and post-paid and also convergent paid billing methods.

### Brief Description of Drawings

For a more complete understanding of the present invention and the advantages thereof, the invention is now described with the aid of the examples and with reference to the following drawings, in which:
Figure 1 presents a block diagram of a mediation solution between the network elements and operations and business support systems.
Figure 2 presents a block diagram of a mediation solution according to an embodiment of the invention.

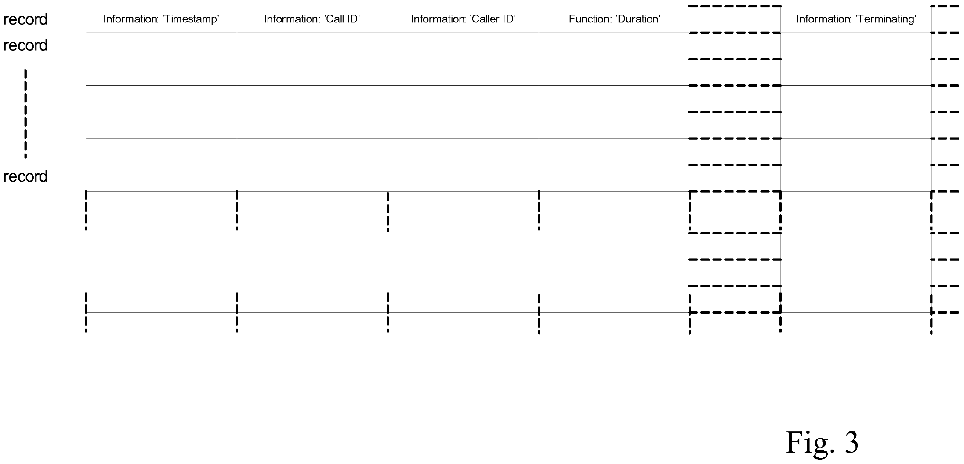

Figure 3 presents a principle of a table in IMDB according to an embodiment of the invention.
Figure 4 presents an overall picture of an example utilizing an embodiment of the invention.
Figure 5 presents the occurrences of point-in-time information in a timescale in the example of Figure 4.
Figures 6a...6g present producing partial records in IMDB at different moments of time in the example of Figure 4.
Figure 7 presents one example of constructing CDRs from partial records of the example of Figure 6g.
Figure 8 presents another example of constructing CDRs from partial records of the example of Figure 6g.

### An example of utilizing an embodiment of the invention

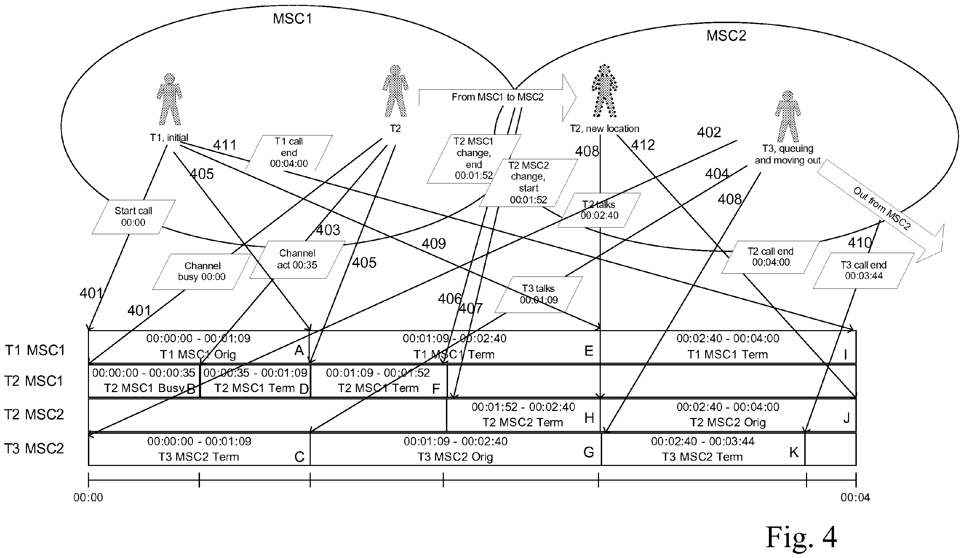

This is an example of a group call, which is presented in Figure 4. The group call is a Push-To-Talk call. The group call causes the network elements to issue data records, which are transmitted to a mediator for construction of CDRs. The following example describes how the data records are processed in the mediator into CDRs according to an embodiment of the invention.

In the example, there are three persons (Terminals 1, 2 and 3, which each have Caller ID respectively T1, T2 and T3) involved with a group call. The call has identification, Call ID 3456. Terminal 1 (T1) initiates the whole call by calling to a predetermined group call number. Terminals T1 and T2 are within the same mobile switch (or likewise e.g. base station) area. This example starts at 00:00:00 and ends 00:04:00. In the example, the group call generates 12 different data records (i.e. point-in-time records). The mediator constructs 11 partial records based on the 12 data records. In this example there are presented timestamp, Call ID, Caller ID, Network element, Duration function, Originating information and Terminating information. A person skilled in the art knows that there are several other additional issues and functions, which can be presented within the scope of the invention.

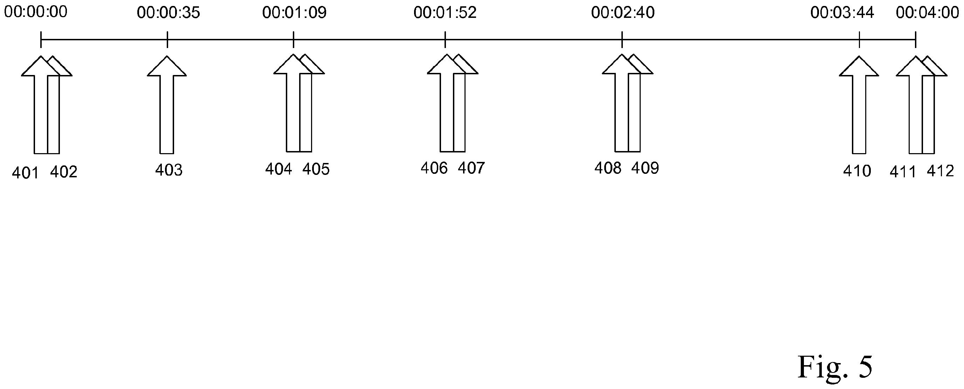

Figure 5 presents, in time scale, all data records (401-412; point-in-time information) issued by network elements (MSC1 and MSC2).

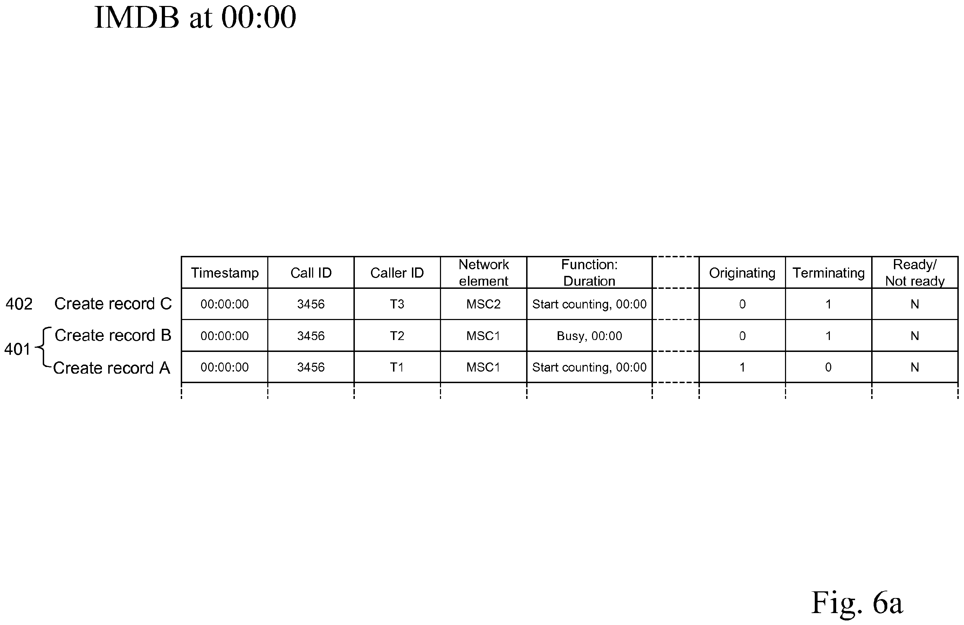

The following example is described as a function of time. The occurring call events and the consequences they cause to mediator (IMDB) are presented step-by-step. This example is presented in figure 4 at overall and in figures 6a...6g at a particular time seen by the in-memory database.

### At 00:00:00 (figure 6a)

### 401 Call event

Start of call. This is generated by MSC1. This data record contains the following information:
- T1 is originating, T2 is terminating
- Identification of T1 (e.g. IMSI),
- Channel information of T1 and T2. T2 is busy (e.g. no channel can be pointed to T2)

### IMDB

Create record A, Start counting duration 00:00:00 Record A "Not ready"
Create record B, T2 is busy 00:00:00, Record B "Not ready"

### 402 Call event

Start of call. This is generated by MSC2. This data record contains the following information:
- T3 is terminating
- Identification of T1 (e.g. IMSI),
- Channel information of T3

### IMDB

Create record C, Start counting duration 00:00:00, Record C "Not ready"

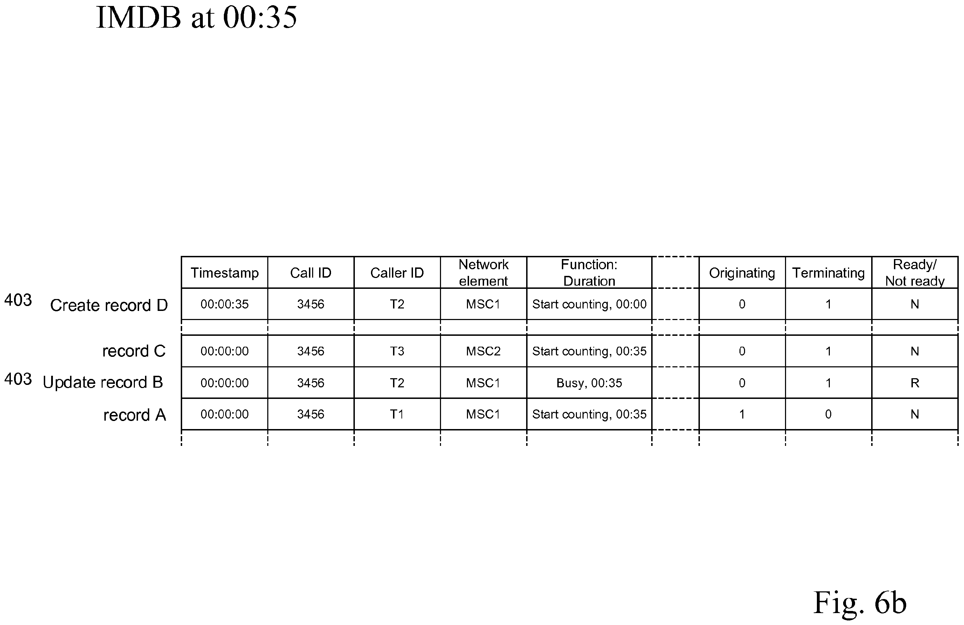

### At 00:00:35 (figure 6b)

### 403 Call event

Call State Change. This is generated by MSC1. This data record contains the following information:
- T2 is terminating
- Identification of T1 (e.g. IMSI),
- Channel information of T2

### IMDB

Update record B, T2 is busy 00:00:35, Record B "Ready"
Create record D, Start counting duration 00:00:00, Record D "Not ready"

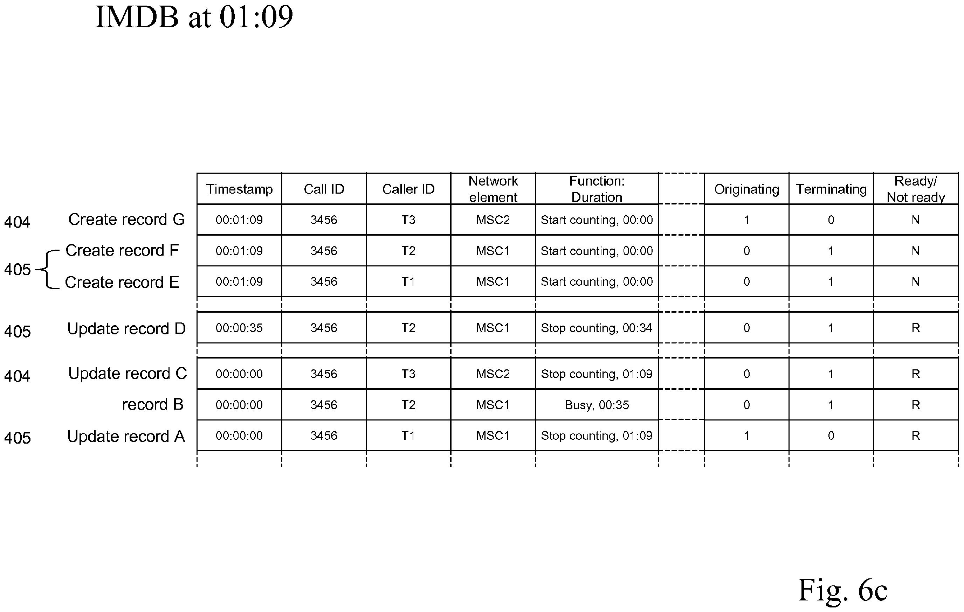

### At 00:01:09 (figure 6c)

### 404 Call event

PTT Update. This is generated by MSC2. This data record contains the following information:
- T3 is originating
- Identification of T3 (e.g. IMSI),
- Channel information of T3

### IMDB

Update record C, Stop counting duration 00:01:09, Record C "Ready"
Create record G, Start counting duration 00:00:00, Record G "Not ready"

### 405 Call event

PTT Update. This is generated by MSC1. This data record contains the following information:
- T1 and T2 are terminating
- Identification of T3 (e.g. IMSI),
- Update the channel information of T1 and T2

### IMDB

Update record A, Stop counting duration 00:01:09, Record A "Ready"
Update record D, Stop counting duration 00:00:34, Record D "Ready"
Create record E, Start counting duration 00:00:00, Record E "Not ready"
Create record F, Start counting duration 00:00:00, Record F "Not ready"

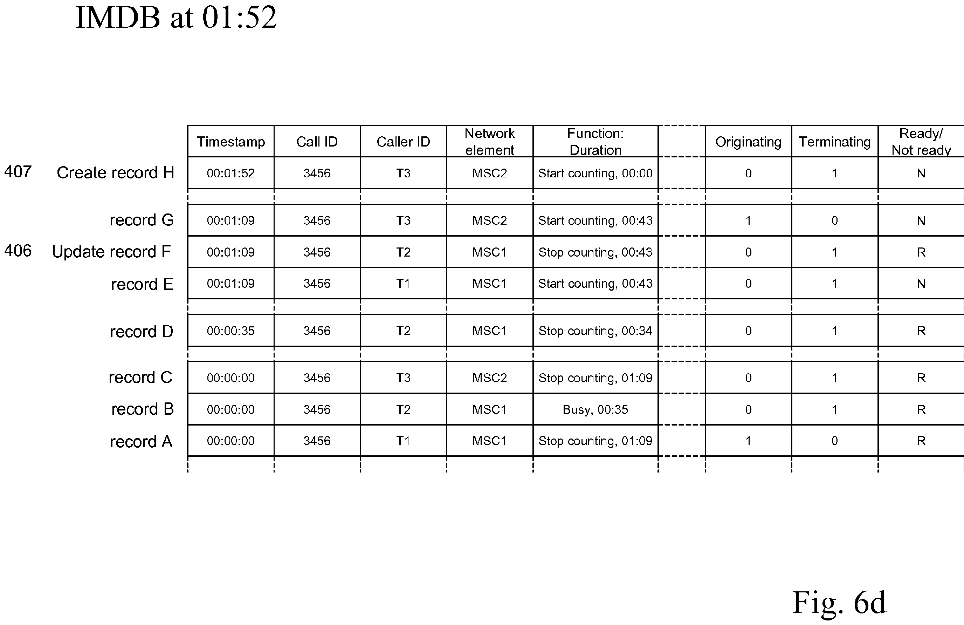

### At 00:01:52 (figure 6d)

### 406 Call event

Call Info Change. This is generated by MSC1. This data record contains the following information:
- T2 changes the area and ends using the facilities of MSC1 (roaming to another area).
- release the used channel in MSC1

### IMDB

Update record F, Stop counting duration 00:00:43, Record F "Ready"

### 407 Call event

Call Info Change. This is generated by MSC2. This data record contains the following information:
- T2 changes the area and starts using the facilities of MSC2 (roaming).
- Channel information of T2

### IMDB

Create record H, Start counting duration 00:00:00, Record H "Not ready"

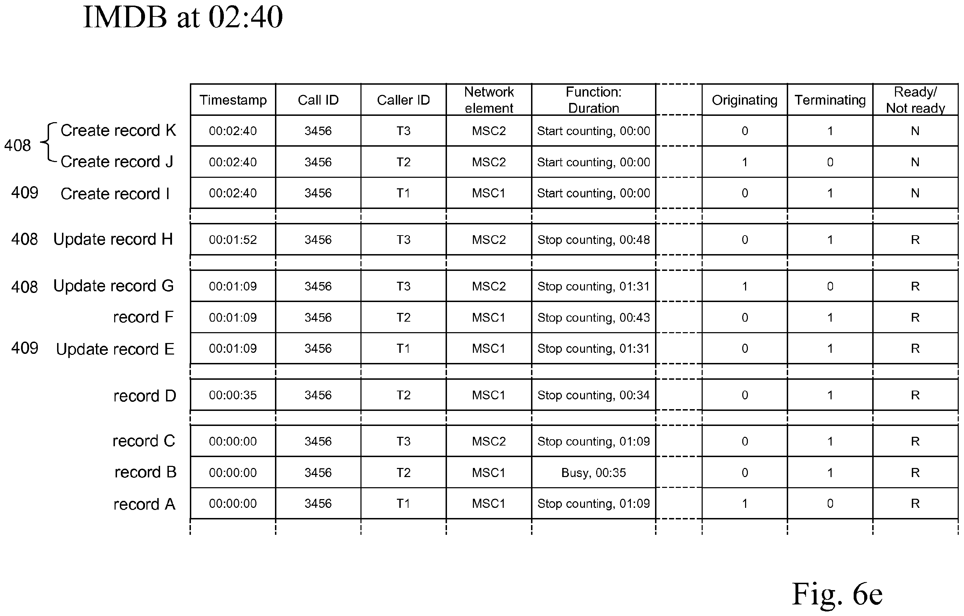

### At 00:02:40 (figure 6e)

### 408 Call event

PTT Update. This is generated by MSC2. This data record contains the following information:
- T2 is originating, T3 is terminating
- Identification of T2 (e.g. IMSI),
- Channel information of T2 and T3

### IMDB

Update record H, Stop counting duration 00:00:48, Record H "Ready"
Update record G, Stop counting duration 00:01:31, Record G "Ready"
Create record J, Start counting duration 00:00:00, Record J "Not ready"
Create record K, Start counting duration 00:00:00, Record K "Not ready"

### 409 Call event

PTT Update. This is generated by MSC1. This data record contains the following information:
- T1 is terminating
- Identification of T2 (e.g. IMSI),
- Update the channel information of T1

### IMDB

Update record E, Stop counting duration 00:01:31, Record E "Ready"
Create record I, Start counting duration 00:00:00, Record I "Not ready"

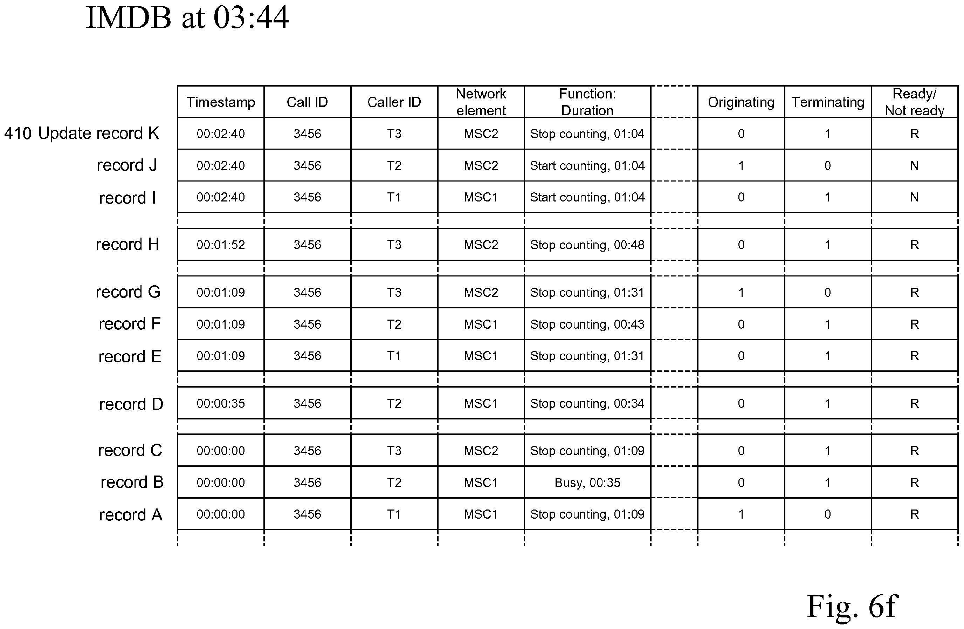

### At 00:03:44 (figure 6f)

### 410 Call event

Call Info Change. This is generated by MSC2. This data record contains the following information:
- T3 ends in the middle of the group call (e.g. no radio coverage, etc.)
- The channel used by T3 is released

### IMDB

Update record K, Stop counting duration 00:01:04, Record K "Ready"

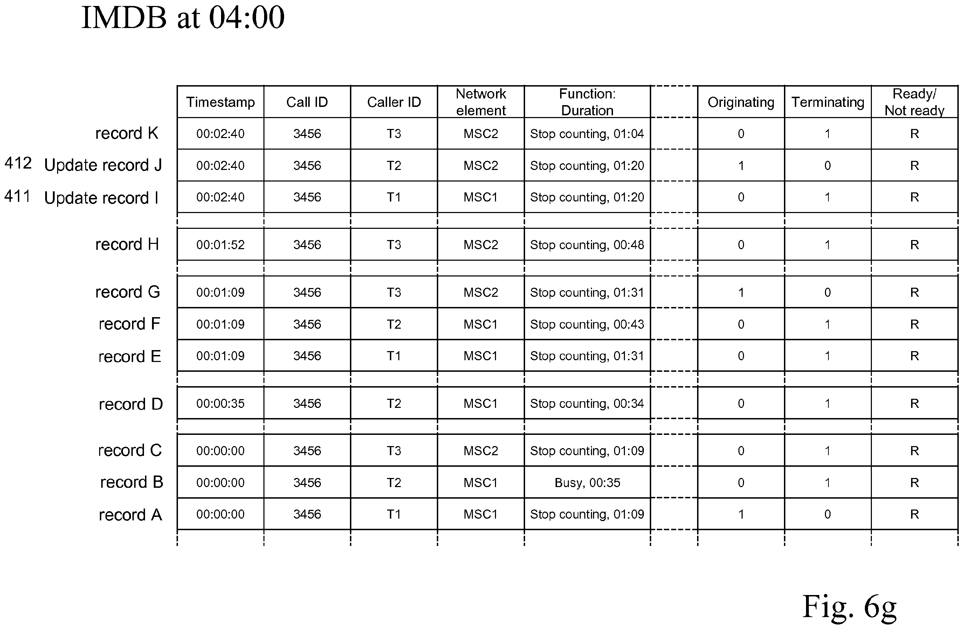

### At 00:04:00 (figure 6g)

### 411 Call event

End of Call. This is generated by MSC1. This data record contains the following information:
- All channels that belong to the group call are released (ended, cut connection)

### IMDB

Update record I, Stop counting duration 00:01:20, Record I "Ready"

### 412 Call event

End of Call. This is generated by MSC2. This data record contains the following information:
- All channels that belong to the group call are released (ended, cut connection)

### IMDB

Update record J, Stop counting duration 00:01:20, Record J "Ready"
All records are ready for delivery (for further processes e.g. billing).

Every record contains also a timestamp and an identification of a (group) call.

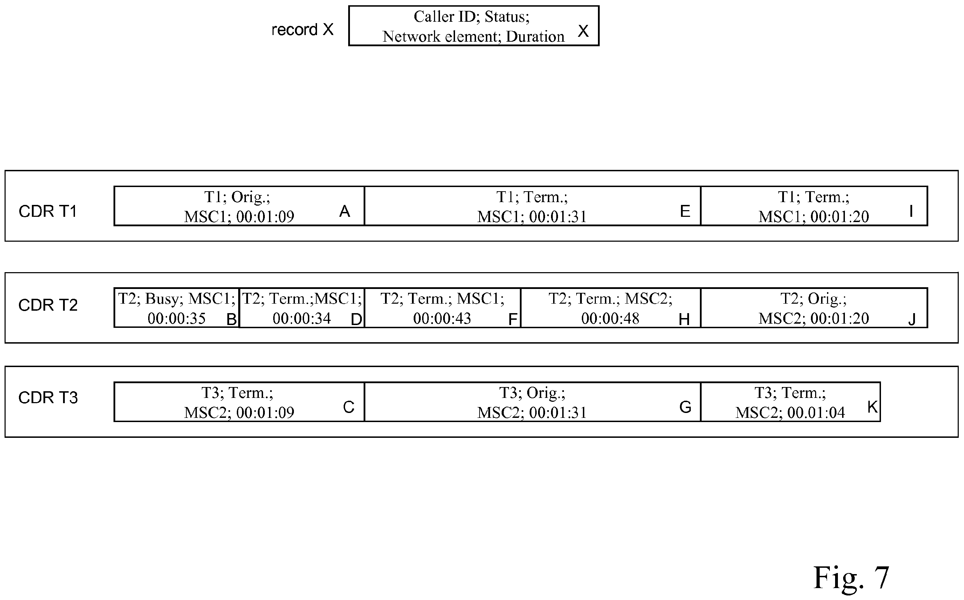

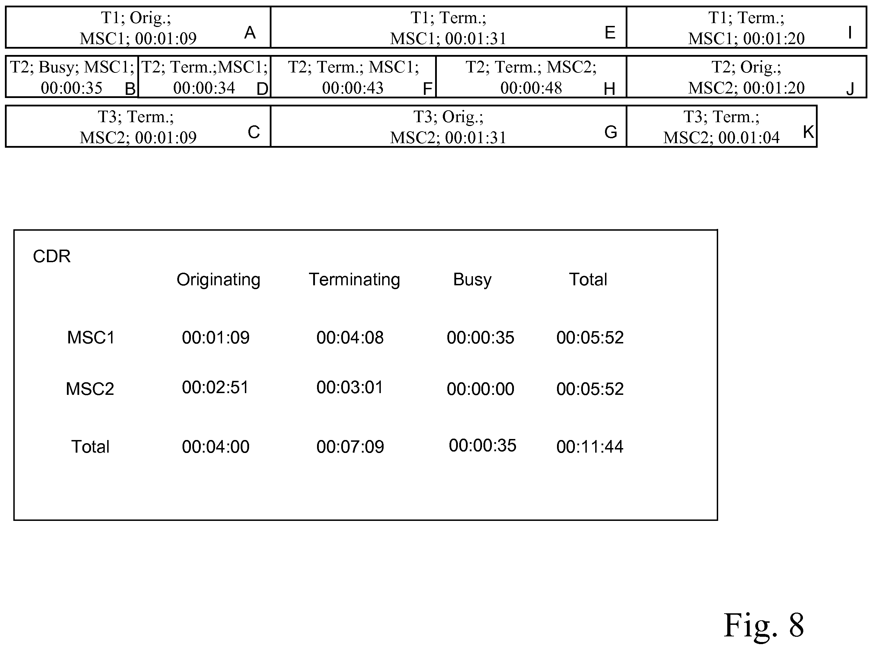

Figure 7 presents CDRs of the example group call by every terminal (T1-T3). The group call is described on behalf of Terminal 1 with records A, E and I, Terminal 2 with records B, D, F, H and J and Terminal 3 with records C, G and K. This kind of division is used for instance in case of billing. From the CDRs all kind of information used in billing can be found. These are for example total duration of call, duration of talk time, duration of listen time, differently billed areas (at home area e.g. WLAN at home the call is cheaper than in operator's network) by time and so on. When the network operator wants to investigate how its network recourses are used the records are divided by network elements. From these CDRs there can be found how many simultaneous terminals are in the same switch, base station, etc. area. This is described in Figure 8.

In an embodiment of the invention the terminals, users or subscribers can have either prepaid or postpaid or even both in use. In case of using prepaid account, the mediation solution first checks the balance of the terminal, user or subscriber from an account. If the account contains enough credit, the mediation solution permits the call process to continue. In other case, i.e. the account does not have enough credit, the mediation solution denies the call process, i.e. prevents it from continuing.

According to an embodiment, when a call ends, all the partial records are ready in the in-memory database from where the CDRs can be delivered to postpaid billing system for invoicing or to prepaid account for updating the balance. In some solutions the terminal may have both billing methods in use. In this case, the pre-paid account may be used first, and after all credits have been used, the mediation solution turns the terminal to postpaid billing mode.

The data records are stored in IMDB in real-time. The data records can create a new row or rows and/or update an existing row or rows in the IMDB. New rows are created e.g. to every terminal when a new call starts or when other terminal takes the originating state. Also a new row is created when a terminal roams to another area or ends the call in the middle.

### Definitions

In this specification, the following terms refer to the following technical concepts:

### Point-in-time information:

Point-in-time information is a specified event or group of specified events that occur at the same time in a known place or area. Point-in-time information can be e.g. Start of Call, PTT Update, Call Info Change, Call State Change, Interconnect Info, End of Call, etc. Point-in-time information has always exact data on the time when it has occurred (timestamp) and to what call it belongs. Point-in-time information is received in IMDB typically in the form of data records, sometimes called as raw data or raw data records.

### Partial record

Partial record is a data record in IMDB and includes data relating to a specified aspect of a call. When a partial record is initiated, it typically includes data from one data record, i.e. one point-in-time information. When the partial record is ready, it typically includes data from at least two data records, i.e. at least two point-in-time information pieces. In some embodiments partial record corresponds to one row in IMDB. Partial call data records may contain different items. Typically partial call data records are placed in a specific table in IMDB. There can be several tables for different purposes in IMDB. The purposes may be e.g. billing, network maintenance, network planning, etc.

### CDR

CDR, Call Data Record is a collection of partial records for a specific purpose, e.g. billing. Therefore, CDRs typically contain information pieces from several point-in-time information records.

### IMDB:

IMDB can contain several tables like any other database. A table contains a structure where in one axis the CDRs are formulated one-by-one (for example one CDR corresponds to one row in a table in IMDB). The wanted items, calculations, functions or such like are presented in the other axis (for example start time of a call, end time of a call, calculated duration of a call, identification information regarding a call or caller or callee, originating/terminating information, etc. corresponds one column in a table in IMDB).

### Description of Embodiments

In an embodiment of the invention, there is provided a method of constructing CDRs relating to a packet-switched call on the basis of data received from network elements participating in the call. The method in performed in a suitable computing system under the direction of a suitable programmed computer program. The computing system with the associated program is referred as "the system" in the following description.

The method of the embodiment comprises following steps:
1. The system receives a plurality of data records relating to the call from the network elements. Each of the data records has an information content relating to an event or events associated with the call. In the embodiment, the information content of each of the data records usually contains at least a time stamp indicating a point in time and an indication of an event relating to the indicated point in time. The received data records may be in the form of original data records issued by the network elements or they may have been converted to a certain format or formats. Even in case of conversion, the information content of the records remains usually essentially the same than in the original data records issued by the network elements.
2. The system analyses at least part of the information content of each of the data records. The received records may contain certain fields that have no relevance for the processing of the records in the system, and thus the system often analyses only part of the information content. In other words, the system processes the part of the information content that is relevant for the processing logic so that the desired types of CDRs can later be constructed on the basis of the information received from the network elements. In this context, the analysing itself may contain, for example, at least one of reading a value from the record, comparing the read value against the processing logic and making a decision on the basis of such a comparison. It is also possible that the step of analysing is supplemented by table look-ups or conversion or modification of the read of processed values, for instance.
3. Responsive to the analysed information content, the system initializes in an in-memory database a sufficient number of simultaneously existing partial records, which contain information relating to the call. The exact number of simultaneously existing partial records is dependent on the received information content and the programmed logic of the system. The purpose of the system is to initialize an own partial record for each aspect of the call that is later needed in order to construct the desired types of CDRs on the basis of the partial records. If the relevant partial record or records already exists in the in-memory database, then the system of course does not initialize an unnecessary duplicate but instead, responsive to the analysed information content, updates the relevant partial record or partial records in the in-memory database. A special feature of the system is that the updating of the simultaneously existing partial records may comprise updating at least two partial records responsive to the analysed information content of a single received data record. This special feature makes it possible to provide all the sufficient information in the form of dedicated partial records as the basis for constructing various types of CDRs. In the example of Figures 6a...6g, each row in the tables corresponds to a partial record described above.
4. The system constructs the desired CDRs on the basis of the information in the partial records. Herein, a CDR may be constructed on the basis of the information in a single partial record or in two or more CDRs as the case may be.

In the embodiment, aspects for which partial records are initialized may include at least one of a channel relating to the call and each terminal relating to the call.

In case of a group call, the method may comprise the steps of:
receiving a data record indicating that a first terminal originates a new call directed to a group of terminating terminals containing at least one second terminal,
analysing at least part of the information content of the data record in order to find out the channels engaged in the call, and
responsive to the analysed information content, initializing a partial record for each of said channels engaged in the call.

The corresponding steps may be performed also in view of any other aspect of the call than the channels used. For example, the method may comprise, instead of or in addition to the above steps,
analysing at least part of the information content of the data record in order to find out the particulars of each of the at least one second terminal engaged in the call, and
responsive to the analysed information content, initializing a partial record for each of said at least one second terminal engaged in the call.

Thus, more generally, an embodiment of the method comprises
providing a set of attributes,
receiving the plurality of data records relating to the call from the network elements, wherein the information content of each of the data records defines a value for at least one attribute in the set of attributes, and
analysing at least part of the information content of each of the data records in order to obtain the value for each of said at least one attribute.

After the above steps, the following further steps are performed for each of said obtained values:
performing a check in the in-memory database in order to find a partial record dedicated to the attribute of said obtained value, and
in case of finding no partial record dedicated to the attribute of said obtained value, initializing a partial record dedicated to the attribute of said obtained value, and
in case of finding a partial record dedicated to the attribute of said obtained value, updating the partial record on the basis of the obtained value.

The attributes may include the channel used in connecting the call or a part of the call, the switch used in connecting the call or a part of the call, the originating terminal, and the terminating terminal or terminals, for instance.

On the other hand, when the call is disconnected, at least one of the network elements issues a data record notifying this event. Then the system receives the data record indicating that the call or a part of the call has been disconnected, and responsive to the indication updates, in one embodiment, all the relevant partial records such that the said updating includes closing the partial records. The closing of a partial record may include setting a flag to this effect in the record, for instance. In the example of Figures 6a...6g, the "Ready/Not ready" column acts as such a flag that indicates whether the partial record is closed or still open to update.

Therefore, in case of a group call, the system may perform the steps of:
initializing an own partial record for each of the terminating terminals and the originating terminal,
updating each of the own partial records on the basis of event data relating to the associated terminal,
closing the own partial records responsive to event data indicating the associated terminal is disconnected, and
constructing at least one CDR for each of the terminating terminals and the originating terminal on the basis of the closed partial record associated with the terminal.

Furthermore, the system may produce other partial records in addition to those associated with each of the terminals. For example, the method may comprise:
initializing partial records dedicated for distinct network resources participating in the connection of the group call,
updating said dedicated partial records on the basis of event data relating to the associated network resources,
closing said dedicated partial records responsive to event data indicating that the associated network resources are disconnected from the call, and
constructing CDRs describing the usage data of the network resources on the basis of the associated closed partial records.

In the method described above, it is possible to initialize a partial record dedicated to a terminal and a partial record dedicated to a network resource on the basis of a single received data record. It is also possible to update a partial record dedicated to a terminal and a partial record dedicated to a network resource on the basis of a single received data record.

The system used in performing the above-described embodiments of the method may be, for example, a mediation system comprising
an in-memory database,
a collector adapted to receive a plurality of data records relating to the call from the network elements, wherein each of the data records has an information content,
a record processor adapted to analyse at least part of the information content of each of the data records, and responsive to the analysed information content, initialize a plurality of simultaneously existing partial records containing information relating to the call in an in-memory database and update the plurality of partial records in the in-memory database, wherein the record processor is adapted to update at least two of the simultaneously existing partial records responsive to a particular information content in a single data record, and
an aggregator adapted to construct the CDRs on the basis of the information in the partial records.

The mediation system and the elements thereof can be adapted and programmed to perform all the different aspects of the above-described embodiments of the method. For this reason, the mediation system usually also comprises a computer program product for directing the system to perform all the steps of the relevant method.

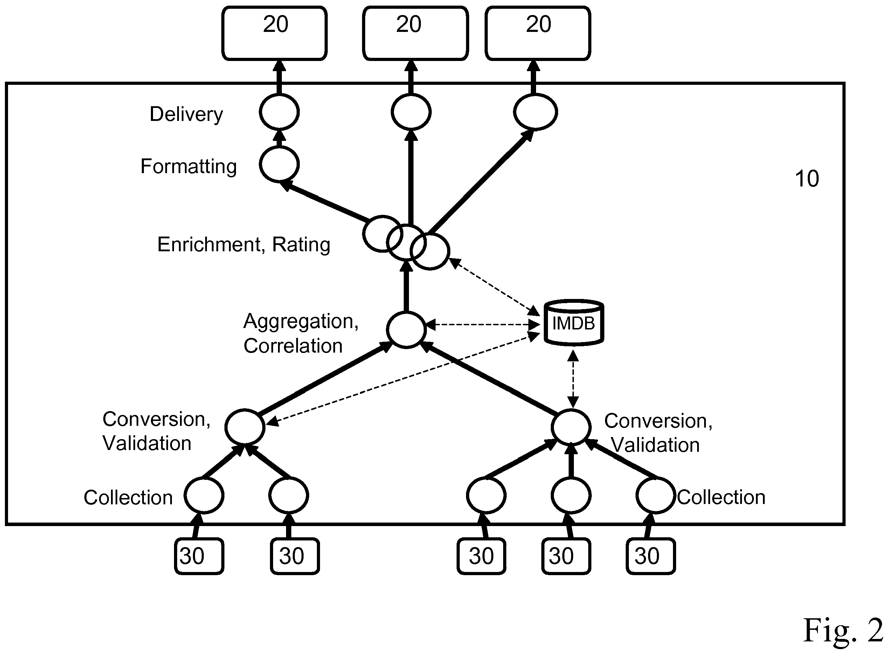

Figure 2 presents one mediation solution according to an embodiment of the invention. From network elements 30 (i.e. telephone switches, routers, proxies, different gateways, etc.) point-in-time information is collected by the mediation solution 10. The collected point-in-time information is processed by the mediation solution. The point-in-time information is stored in a processing database, for instance in an in-memory database. The point-in-time information is stored in the in-memory database in a data record called a partial record. The embodiment of the invention makes it possible to create, update, store, count, load, etc. partial records in real-time in in-memory database within just any phase of the mediation process. Nevertheless, the most appropriate sub processes are e.g. conversion, validation, aggregation, correlation, enrichment, rating and formatting. From the in-memory database, the ready partial records can be uploaded to some operation support system like billing 20. Other possibility is that operation support system 20 calls a set of particular partial records e.g. regarding to some telephone call (e.g. who have been involved with the call), all calls made by some user (e.g. to which numbers the user has called) or all calls made in some particular area (e.g. how many users are using the network resources). It is apparent that the "call" can be also messaging, gaming or any other action using communication networks.

Therefore, the presented invention contains a special arrangement for processing data records in a mediation system in scenarios wherein the processing of one record is dependent on one or several other records. Some examples of such mediation functionalities are aggregation, correlation, duplicate checking and enrichment.

The above description is only to exemplify the invention and is not intended to limit the scope of protection offered by the claims.

## Claims

1. A method of constructing Call Data Records, CDRs, relating to a packet-switched call on the basis of data received from network elements participating in the call, the method comprising
receiving a plurality of data records relating to the call from the network elements, wherein each of the data records has an information content,
analysing at least part of the information content of each of the data records, and
responsive to the analysed information content, initializing a plurality of simultaneously existing partial records containing information relating to the call in an in-memory database and updating the plurality of partial records in the in-memory database, wherein said updating the plurality of simultaneously existing partial records comprises at least once updating at least two partial records responsive to the analysed information content of a single data record in said plurality of data records, and
constructing the CDRs on the basis of the information in the partial records, **characterized by**
receiving a data record indicating that a first terminal (T1) originates (401) a new call directed to a group of terminating terminals containing a plurality of second terminals (T2, T3),
analysing at least part of the information content of the data record in order to find out the channels engaged in the call, and
responsive to the analysed information content:
initializing (401, 402, 403) a partial record for each of said channels engaged in the call, and additionally initializing at least one partial record for each terminal relating to the call, or
if the relevant partial record or records already exist, updating the relevant partial record or partial records instead of initializing a new partial record or new partial records.

2. The method of claim 1, wherein the information content of each of the data records contains a time stamp indicating a point in time and an indication of an event relating to the indicated point in time.

3. The method of claim 1 or 2, wherein the constructing of the CDRs comprises constructing a CDR on the basis of the information in a single partial record.

4. The method of claim 1 or 2, wherein the constructing of the CDRs comprises constructing a CDR on the basis the information in at least two different partial records.

5. The method according to any of claims 1 to 4, comprising
receiving a data record indicating that a first terminal originates a new call directed to a group of terminating terminals containing a plurality of second terminals, analysing at least part of the information content of the data record in order to find out the particulars of each of the plurality of second terminals engaged in the call, and
responsive to the analysed information content, initializing a partial record for each of said plurality of second terminals engaged in the call.

6. The method according to any of claims 1 to 5, comprising
providing a set of attributes,
receiving the plurality of data records relating to the call from the network elements, wherein the information content of each of the data records defines a value for at least one attribute in the set of attributes,
analysing at least part of the information content of each of the data records in order to obtain the value for each of said at least one attribute, and
for each of said obtained value:
performing a check in the in-memory database in order to find a partial record dedicated to the attribute of said obtained value,
in case of finding no partial record dedicated to the attribute of said obtained value, initializing a partial record dedicated to the attribute of said obtained value, and
in case of finding a partial record dedicated to the attribute of said obtained value, updating the partial record on the basis of the obtained value.

7. The method according to claim 6, wherein the set of attributes includes the channel used in connecting the call or a part of the call.

8. The method according to claim 6 or 7, wherein the set of attributes includes the switch used in connecting the call or a part of the call.

9. The method according to any of claims 6 to 8, wherein the set of attributes includes the originating terminal.

10. The method according to any of claims 6 to 9, wherein the set of attributes includes the terminating terminal.

11. The method according to any of claims 1 to 10, comprising
receiving a data record, the information content of which indicates that the call or a part of the call has been disconnected, and
responsive to the information content, updating at least one partial record, wherein said updating includes closing the partial record.

12. The method according to any of claims 1 to 11, wherein the call is a group call originated by an originating terminal and connected to a plurality of terminating terminals, and the method comprises
initializing an individual partial record for each of the terminating terminals and the originating terminal,
updating each of the individual partial records on the basis of event data relating to the associated terminal,
closing the individual partial records responsive to event data indicating the associated terminal is disconnected, and
constructing at least one CDR for each of the terminating terminals and the originating terminal on the basis of the closed partial record associated with the terminal.

13. The method according to claim 12, comprising
initializing partial records dedicated for distinct network resources participating in the connection of the group call,
updating said dedicated partial records on the basis of event data relating to the associated network resources,
closing said dedicated partial records responsive to event data indicating that the associated network resources are disconnected from the call, and
constructing CDRs describing the usage data of the network resources on the basis of the associated closed partial records.

14. The method according to claim 13, comprising at least once during the group call initializing a partial record dedicated to a terminal and a partial record dedicated to a network resource on the basis of a single received data record.

15. The method according to claims 13 or 14, comprising at least once during the group call updating a partial record dedicated to a terminal and a partial record dedicated to a network resource on the basis of a single received data record.

16. A mediation system for generating Call Data Records, CDRs, relating to a packet-switched call on the basis of data received from network elements participating in the call, the system comprising
an in-memory database,
a collector adapted to receive a plurality of data records relating to the call from the network elements, wherein each of the data records has an information content,
a record processor adapted to analyse at least part of the information content of each of the data records, and responsive to the analysed information content, initialize a plurality of simultaneously existing partial records containing information relating to the call in an in-memory database and update the plurality of partial records in the in-memory database, wherein the record processor is adapted to update at least two of the simultaneously existing partial records responsive to a particular information content in a single data record, and
an aggregator adapted to construct the CDRs on the basis of the information in the partial records,
**characterized in that** the system is adapted to process a group call originated by an originating terminal (T1) and connected to a plurality of terminating terminals (T2, T3), wherein the system is adapted to
receive a data record indicating that a first terminal (T1) originates a new call directed to a group of terminating terminals containing a plurality of second terminals (T2, T3),
analyse at least part of the information content of the data record in order to find out the channels engaged in the call, initialize (401, 402, 403) a partial record for each of the terminating terminals (T2, T3) and the originating terminal (T1), if the relevant partial record does not already exist,
additionally initialize (401, 402, 403) at least one partial record for each channel (T1, T2, T3) relating to the call, if the relevant partial record does not already exist
update (404, 405, 406) each of the partial records on the basis of event data relating to a terminal associated with the event, if the relevant partial record or records already exist,
close (409, 410, 411, 412) the relevant partial records responsive to event data indicating that a terminal associated with the event is disconnected, and
construct at least one CDR for each of the terminating terminals (T2, T3) and the originating terminal (T1) on the basis of the closed partial record associated with the terminal.

17. The system of claim 16, adapted to receive data records, the information content of which contains a time stamp indicating a point in time and an indication of an event relating to the indicated point in time.

18. The system of claim 16 or 17, wherein the aggregator is capable of using information in a plurality of partial records in constructing a single CDR.

19. The system according to any of claims 16 to 18, comprising a set of attributes defined in the system, and adapted to
receive data records relating to a call from the network elements, wherein the information content of each of the data records defines a value for at least one attribute in the set of attributes,
analyse at least part of the information content of each of the data records in order to obtain the value for each of said at least one attribute, and
for each of said obtained value:
perform a check in the in-memory database in order to find a partial record dedicated to the attribute of said obtained value,
in case of finding no partial record dedicated to the attribute of said obtained value, initialize a partial record dedicated to the attribute of said obtained value, and
in case of finding a partial record dedicated to the attribute of said obtained value, update the partial record on the basis of the obtained value.

20. The system according to claim 19, wherein the set of attributes includes at least two attributes selected from the group of:
the channel used in connecting the call or a part of the call,
the switch used in connecting the call or a part of the call,
the originating terminal, and
the terminating terminal.

21. The system according to claim 16, adapted to
initialize partial records dedicated for distinct network resources participating in the connection of the group call,
update said dedicated partial records on the basis of event data relating to the associated network resources,
close said dedicated partial records responsive to event data indicating that the associated network resources are disconnected from the call, and
construct CDRs describing the usage data of the network resources on the basis of the associated closed partial records.

22. The system according to claim 21, adapted to initialize a partial record dedicated to a terminal and a partial record dedicated to a network resource on the basis of a single received data record.

23. The system according to claim 21 or 22, adapted to update a partial record dedicated to a terminal and a partial record dedicated to a network resource on the basis of a single received data record.

24. A computer program product for performing all the steps of at least one of the claims 1 to 15.

25. The system according to any of claims 16 to 23 adapted to be used in billing for packet-switched calls.

26. The system of claim 25 adapted to be used in one of pre-paid billing, post-paid billing and convergent billing.

27. The system of claim 25 or 26, adapted to determine charges on the basis of the generated CDRs.

## Patentansprüche

1. Verfahren zum Aufbau von Anrufdatenaufzeichnungen, CDRs, in Bezug auf einen paketvermittelten Anruf auf Grundlage von Daten, die von Netzwerkelementen erhalten werden, die an dem Anruf beteiligt sind, wobei das Verfahren Folgendes umfasst:
Erhalten von mehreren Datenaufzeichnungen in Bezug auf den Anruf von den Netzwerkelementen, wobei jede der Datenaufzeichnungen einen Informationsgehalt aufweist, Analysieren mindestens eines Teils des Informationsgehalts von jeder der Datenaufzeichnungen, und
in Reaktion auf den analysierten Informationsgehalt, Starten von mehreren gleichzeitig vorhandenen Teilaufzeichnungen, die Informationen in Bezug auf den Anruf in einer In-Memory-Datenbank enthalten, und Aktualisieren der mehreren Teilaufzeichnungen in der In-Memory-Datenbank, wobei das Aktualisieren der mehreren gleichzeitig vorhandenen Teilaufzeichnungen mindestens das einmalige Aktualisieren von mindestens zwei Teilaufzeichnungen in Reaktion auf den analysierten Informationsgehalt einer einzigen Datenaufzeichnung in den mehreren Datenaufzeichnungen umfasst, und
Aufbauen der CDRs auf Grundlage der Informationen in den Teilaufzeichnungen,
**gekennzeichnet durch**
Erhalten einer Datenaufzeichnung, die angibt, dass ein erstes Endgerät (T1) einen neuen Anruf ausgibt (401), der auf eine Gruppe von Zielendgeräten gerichtet ist, die mehrere zweite Endgeräte (T2, T3) enthalten,
Analysieren mindestens eines Teils des Informationsgehalts der Datenaufzeichnung, um die Kanäle zu ermitteln, die an dem Anruf beteiligt sind, und
in Reaktion auf den analysierten Informationsgehalt:
Starten (401, 402, 403) einer Teilaufzeichnung für jeden der Kanäle, die an dem Anruf beteiligt sind, und zusätzlich Starten von mindestens einer Teilaufzeichnung für jedes Endgerät in Bezug auf den Anruf, oder
wenn die relevante oder relevanten Teilaufzeichnung oder Teilaufzeichnungen bereits vorhanden sind, Aktualisieren der relevanten Teilaufzeichnung oder Teilaufzeichnungen anstelle des Startens einer neuen Teilaufzeichnung oder von neuen Teilaufzeichnungen.

2. Verfahren nach Anspruch 1, wobei der Informationsgehalt von jeder der Datenaufzeichnungen einen Zeitstempel enthält, der einen Zeitpunkt und eine Angabe eines Ereignisses in Bezug auf den angegebenen Zeitpunkt angibt.

3. Verfahren nach Anspruch 1 oder 2, wobei das Aufbauen der CDRs das Aufbauen einer CDR auf Grundlage der Informationen in einer einzigen Teilaufzeichnung umfasst.

4. Verfahren nach Anspruch 1 oder 2, wobei das Aufbauen der CDRs das Aufbauen einer CDR auf Grundlage der Informationen in mindestens zwei verschiedenen Teilaufzeichnungen umfasst.

5. Verfahren nach einem der Ansprüche 1 bis 4, umfassend Erhalten einer Datenaufzeichnung, die angibt, dass ein erstes Endgerät einen neuen Anruf ausgibt, der auf eine Gruppe von Zielendgeräten gerichtet ist, die mehrere zweite Endgeräte enthalten,
Analysieren mindestens eines Teils des Informationsgehalts der Datenaufzeichnung, um die Besonderheiten von jedem der mehreren zweiten Endgeräte, die an dem Anruf beteiligt sind, zu ermitteln, und
in Reaktion auf den analysierten Informationsgehalt, Starten einer Teilaufzeichnung für jedes der mehreren zweiten Endgeräte, die an dem Anruf beteiligt sind.

6. Verfahren nach einem der Ansprüche 1 bis 5, umfassend das Bereitstellen einer Gruppe von Attributen,
das Erhalten der mehreren Datenaufzeichnungen in Bezug auf den Anruf von den Netzwerkelementen, wobei der Informationsgehalt von jeder der Datenaufzeichnungen einen Wert für mindestens ein Attribut in der Gruppe von Attributen definiert,
das Analysieren mindestens eines Teils des Informationsgehalts von jeder der Datenaufzeichnungen, um den Wert für jedes des mindestens einen Attributs zu erhalten, und
für jeden des erhaltenen Werts:
das Durchführen einer Prüfung in der In-Memory-Datenbank, um eine Teilaufzeichnung zu finden, die für das Attribut des erhaltenen Werts bestimmt ist,
für den Fall, dass keine Teilaufzeichnung gefunden wird, die für das Attribut des erhaltenen Werts bestimmt ist, das Starten einer Teilaufzeichnung, die für das Attribut des erhaltenen Werts bestimmt ist, und
für den Fall, dass eine Teilaufzeichnung gefunden wird, die für das Attribut des erhaltenen Werts bestimmt ist, das Aktualisieren der Teilaufzeichnung auf Grundlage des erhaltenen Werts.

7. Verfahren nach Anspruch 6, wobei die Gruppe von Attributen den Kanal beinhaltet, der beim Verbinden des Anrufs oder eines Teils des Anrufs verwendet wird.

8. Verfahren nach Anspruch 6 oder 7, wobei die Gruppe von Attributen den Schalter beinhaltet, der beim Verbinden des Anrufs oder eines Teils des Anrufs verwendet wird.

9. Verfahren nach einem der Ansprüche 6 bis 8, wobei die Gruppe von Attributen das anrufende Endgerät beinhaltet.

10. Verfahren nach einem der Ansprüche 6 bis 9, wobei die Gruppe von Attributen das Zielendgerät beinhaltet.

11. Verfahren nach einem der Ansprüche 1 bis 10, umfassend das Erhalten einer Datenaufzeichnung, deren Informationsgehalt angibt, dass der Anruf oder ein Teil des Anrufs getrennt worden ist, und
in Reaktion auf den Informationsgehalt das Aktualisieren mindestens einer Teilaufzeichnung, wobei das Aktualisieren das Schließen der Teilaufzeichnung beinhaltet.

12. Verfahren nach einem der Ansprüche 1 bis 11, wobei der Anruf ein Gruppenanruf ist, der von einem anrufenden Endgerät ausgegeben wird und mit mehreren Zielendgeräten verbunden wird, und das Verfahren Folgendes umfasst:
Starten einer einzelnen Teilaufzeichnung für jedes der Zielendgeräte und das anrufende Endgerät,
Aktualisieren jeder der einzelnen Teilaufzeichnungen auf Grundlage von Ereignisdaten in Bezug auf das zugehörige Endgerät,
Schließen der einzelnen Teilaufzeichnungen in Reaktion auf Ereignisdaten, die angeben, dass das zugehörige Endgerät getrennt ist, und
Aufbauen mindestens einer CDR für jedes der Zielendgeräte und das anrufende Endgerät auf Grundlage der geschlossenen Teilaufzeichnung, die mit dem Endgerät verknüpft ist.

13. Verfahren nach Anspruch 12, umfassend
das Starten von Teilaufzeichnungen, die für unterschiedliche Netzwerkressourcen bestimmt sind, die an der Verbindung des Gruppenanrufs beteiligt sind,
das Aktualisieren der bestimmten Teilaufzeichnungen auf Grundlage von Ereignisdaten in Bezug auf die zugehörigen Netzwerkressourcen,
das Schließen der bestimmten Teilaufzeichnungen in Reaktion auf Ereignisdaten, die angeben, dass die zugehörigen Netzwerkressourcen von dem Anruf getrennt sind, und
das Aufbauen von CDRs, die die Nutzdaten der Netzwerkressourcen beschreiben, auf Grundlage der zugehörigen geschlossenen Teilaufzeichnungen.

14. Verfahren nach Anspruch 13, umfassend mindestens einmal während des Gruppenanrufs das Starten einer Teilaufzeichnung, die für ein Endgerät bestimmt ist, und einer Teilaufzeichnung, die für eine Netzwerkressource bestimmt ist, auf Grundlage einer einzigen erhaltenen Datenaufzeichnung.

15. Verfahren nach den Ansprüchen 13 oder 14, umfassend mindestens einmal während des Gruppenanrufs das Aktualisieren einer Teilaufzeichnung, die für ein Endgerät bestimmt ist, und einer Teilaufzeichnung, die für eine Netzwerkressource bestimmt ist, auf Grundlage einer einzigen erhaltenen Datenaufzeichnung.

16. Vermittlungssystem zur Erzeugung von Anrufdatenaufzeichnungen, CDRs, in Bezug auf einen paketvermittelten Anruf auf Grundlage von Daten, die von Netzwerkelementen erhalten werden, die an dem Anruf beteiligt sind, wobei das System Folgendes umfasst:
eine In-Memory-Datenbank,
einen Kollektor, der angepasst ist, um mehrere Datenaufzeichnungen in Bezug auf den Anruf von den Netzwerkelementen zu erhalten, wobei jede der Datenaufzeichnungen einen Informationsgehalt aufweist,
einen Aufzeichnungsprozessor, der angepasst ist, um mindestens einen Teil des Informationsgehalts von jeder der Datenaufzeichnungen zu analysieren, und in Reaktion auf den analysierten Informationsgehalt mehrere gleichzeitig vorhandene Teilaufzeichnungen zu starten, die Informationen in Bezug auf den Anruf in einer In-Memory-Datenbank enthalten, und die mehreren Teilaufzeichnungen in der In-Memory-Datenbank zu aktualisieren, wobei der Aufzeichnungsprozessor angepasst ist, um mindestens zwei der gleichzeitig vorhandenen Teilaufzeichnungen in Reaktion auf einen bestimmten Informationsgehalt in einer einzigen Datenaufzeichnung zu aktualisieren, und
einen Aggregator, der angepasst ist, um die CDRs auf Grundlage der Informationen in den Teilaufzeichnungen aufzubauen,
**dadurch gekennzeichnet, dass** das System angepasst ist, um einen Gruppenanruf, der von einem anrufenden Endgerät (T1) ausgegeben wird und mit mehreren Zielendgeräten (T2, T3) verbunden wird, zu verarbeiten, wobei das System angepasst ist, um
eine Datenaufzeichnung zu erhalten, die angibt, dass ein erstes Endgerät (T1) einen neuen Anruf ausgibt, der auf eine Gruppe von Zielendgeräten gerichtet ist, die mehrere zweite Endgeräte (T2, T3) enthalten,
mindestens einen Teil des Informationsgehalts der Datenaufzeichnung zu analysieren, um die Kanäle zu ermitteln, die an dem Anruf beteiligt sind,
eine Teilaufzeichnung für jedes der Zielendgeräte (T2, T3) und das anrufende Endgerät (T1) zu starten (401, 402, 403), wenn die relevante Teilaufzeichnung nicht bereits vorhanden ist,
zusätzlich mindestens eine Teilaufzeichnung für jeden Kanal (T1, T2, T3) in Bezug auf den Anruf zu starten (401, 402, 403), wenn die relevante Teilaufzeichnung nicht bereits vorhanden ist,
jede der Teilaufzeichnungen auf Grundlage von Ereignisdaten in Bezug auf ein Endgerät, das mit dem Ereignis verknüpft ist, zu aktualisieren (404, 405, 406), wenn die relevante Teilaufzeichnung oder die relevanten Teilaufzeichnungen bereits vorhanden sind, die relevanten Teilaufzeichnungen in Reaktion auf Ereignisdaten, die angeben, dass ein Endgerät, das mit dem Ereignis verknüpft ist, getrennt ist, zu schließen (409, 410, 411, 412), und
mindestens eine CDR für jedes der Zielendgeräte (T2, T3) und das anrufende Endgerät (T1) auf Grundlage der geschlossenen Teilaufzeichnung, die mit dem Endgerät verknüpft ist, aufzubauen.

17. System nach Anspruch 16, das angepasst ist, um Datenaufzeichnungen zu erhalten, deren Informationsgehalt einen Zeitstempel enthält, der einen Zeitpunkt und eine Angabe eines Ereignisses in Bezug auf den angegebenen Zeitpunkt angibt.

18. System nach Anspruch 16 oder 17, wobei der Aggregator in der Lage ist, Informationen in mehreren Teilaufzeichnungen beim Aufbauen einer einzigen CDR zu verwenden.

19. System nach einem der Ansprüche 16 bis 18, umfassend eine Gruppe von Attributen, die in dem System definiert ist, und das angepasst ist, um Datenaufzeichnungen in Bezug auf einen Anruf von den Netzwerkelementen zu erhalten, wobei der Informationsgehalt von jeder der Datenaufzeichnungen einen Wert für mindestens ein Attribut in der Gruppe von Attributen definiert,
mindestens einen Teil des Informationsgehalts von jeder der Datenaufzeichnungen zu analysieren, um den Wert für jedes des mindestens einen Attributs zu erhalten, und
für jeden des erhaltenen Werts:
eine Prüfung in der In-Memory-Datenbank durchzuführen, um eine Teilaufzeichnung zu finden, die für das Attribut des erhaltenen Werts bestimmt ist,
für den Fall, dass keine Teilaufzeichnung gefunden wird, die für das Attribut des erhaltenen Werts bestimmt ist, eine Teilaufzeichnung zu starten, die für das Attribut des erhaltenen Werts bestimmt ist, und
für den Fall, dass eine Teilaufzeichnung gefunden wird, die für das Attribut des erhaltenen Werts bestimmt ist, die Teilaufzeichnung auf Grundlage des erhaltenen Werts zu aktualisieren.

20. System nach Anspruch 19, wobei die Gruppe von Attributen mindestens zwei Attribute beinhaltet, die aus folgender Gruppe ausgewählt sind:
der Kanal, der beim Verbinden des Anrufs oder eines Teils des Anrufs verwendet wird,
der Schalter, der beim Verbinden des Anrufs oder eines Teils des Anrufs verwendet wird,
das anrufende Endgerät, und
das Zielendgerät.

21. System nach Anspruch 16, das angepasst ist, um Teilaufzeichnungen zu starten, die für unterschiedliche Netzwerkressourcen bestimmt sind, die an der Verbindung des Gruppenanrufs beteiligt sind, die bestimmten Teilaufzeichnungen auf Grundlage von Ereignisdaten in Bezug auf die zugehörigen Netzwerkressourcen zu aktualisieren,
die bestimmten Teilaufzeichnungen in Reaktion auf Ereignisdaten zu schließen, die angeben, dass die zugehörigen Netzwerkressourcen von dem Anruf getrennt sind, und
CDRs aufzubauen, die die Nutzdaten der Netzwerkressourcen beschreiben, auf Grundlage der zugehörigen geschlossenen Teilaufzeichnungen.

22. System nach Anspruch 21, das angepasst ist, um eine Teilaufzeichnung, die für ein Endgerät bestimmt ist, und eine Teilaufzeichnung, die für eine Netzwerkressource bestimmt ist, auf Grundlage einer einzigen erhaltenen Datenaufzeichnung zu starten.

23. System nach Anspruch 21 oder 22, das angepasst ist, um eine Teilaufzeichnung, die für ein Endgerät bestimmt ist, und eine Teilaufzeichnung, die für eine Netzwerkressource bestimmt ist, auf Grundlage einer einzigen erhaltenen Datenaufzeichnung zu aktualisieren.

24. Computerprogrammprodukt zum Durchführen aller Schritte von mindestens einem der Ansprüche 1 bis 15.

25. System nach einem der Ansprüche 16 bis 23, das angepasst ist, um bei der Abrechnung für paketvermittelte Anrufe verwendet zu werden.

26. System nach Anspruch 25, das angepasst ist, um bei einer einer Prepaid-Abrechnung, Postpaid-Abrechnung und konvergenten Abrechnung verwendet zu werden.

27. System nach Anspruch 25 oder 26, das angepasst ist, um Gebühren auf Grundlage der erzeugten CDRs zu bestimmen.

## Revendications

1. Procédé de construction de registres de données d'appel, CDRs, relatif à un appel commuté par paquets sur la base de donné reçues à partir d'éléments de réseau participant à l'appel, le procédé comprenant de
recevoir une pluralité de registres de données relatifs à l'appel provenant des éléments de réseau dans lequel chacun des registres de données a un contenu d'information,
analyser au moins une partie du contenu d'information de chacun des registres de données et
en réponse au contenu d'information analysé, initialiser une pluralité de registres partiels existants simultanément contenant une information relative à l'appel dans une base de données en mémoire et mettre à jour la pluralité de registres de données dans la base de données en mémoire, dans lequel ladite mise à jour de la pluralité de registres partiels existants simultanément comprend au moins une fois la mise à jour d'au moins deux registres partiels en réponse au contenu d'information analysé d'un registre de données uniques dans ladite pluralité de registres de données, et
construire les CDRs sur la base de l'information dans les registres partiels, **caractérisé par**
recevoir un registre de données indiquant qu'un premier terminal (T1) émet (401) un nouvel appel dirigé vers un groupe de terminaux de terminaison contenant une pluralité de seconds terminaux (T2,T3), analyser au moins une partie du contenu d'information du registre de données de manière à découvrir les canaux engagés dans l'appel et
en réponse au contenu d'informations analysé :
initialiser (401,402,403) un registre partiel pour chacun desdits canaux engagés dans l'appel et initialiser additionnellement au moins un registre partiel pour chaque terminal relatif à l'appel, ou
si le registre partiel ou les registres partiels significatifs existent déjà, mettre à jour le registre partiel ou les registres partiels significatifs au lieu d'initialiser un nouveau registre partiel ou des nouveaux registres partiels.

2. Procédé selon la revendication 1, dans lequel le contenu d'information de chacun des registres de données contient un pointeur temporel indiquant un pointeur dans le temps et une indication d'un événement ou un point dans le temps indiqué.

3. Procédé selon la revendication 1 ou 2, dans lequel la construction des CDRs comprend de construire un CDR sur la base de l'information dans un registre partiel unique.

4. Procédé selon la revendication 1 ou 2, dans lequel la construction des CDRs comprend de construire un CDR sur la base de l'information dans au moins deux registres partiels différents.

5. Procédé selon une quelconque des revendications 1 à 4, comprenant de :
recevoir un registre de données indiquant qu'un premier terminal émet un nouvel appel dirigé vers un groupe de terminaux de terminaison contenant une pluralité de seconds terminaux,
analyser au moins une partie du contenu d'information du registre de données de manière à découvrir les terminaux particuliers de chacun de la pluralité de seconds terminaux engagés dans l'appel, et
en réponse au contenu d'informations analysées, initialiser un registre partiel pour chacun de ladite pluralité de seconds terminaux engagés dans l'appel.

6. Procédé selon une quelconque des revendications 1 à 5, comprenant de :
fournir un ensemble d'attributs,
recevoir la pluralité de registres de données relatifs à l'appel à partir des éléments de réseau, dans lequel le contenu d'information de chacun des registres de données définit une valeur pour au moins un attribut dans l'ensemble d'attributs,
analyser au moins une partie du contenu d'information de chacun des registres de données de manière à obtenir la valeur pour chacun desdits au moins un attribut, et
pour chacune desdites valeurs obtenues :
effectuer une vérification dans la base de données en mémoire de manière à trouver un registre partiel dédié à l'attribut de ladite valeur obtenue,
au cas où aucun registre partiel dédié à l'attribut de ladite valeur obtenue n'est trouvé, initialiser un registre partiel dédié à l'attribut de ladite valeur obtenue et
au cas où un registre partiel dédié à l'attribut de ladite valeur obtenue est trouvé, mettre à jour le registre partiel sur la base de la valeur obtenue.

7. Procédé selon la revendication 6, dans lequel l'ensemble d'attributs inclut le canal pour la connexion de l'appel ou d'une partie de l'appel.

8. Procédé selon la revendication 6 ou 7, dans lequel l'ensemble d'attributs inclut le commutateur utilisé pour la connexion de l'appel ou d'une partie de l'appel.

9. Procédé selon une quelconque des revendications 6 à 8, dans lequel l'ensemble d'attributs inclut le terminal d'origine.

10. Procédé selon une quelconque des revendications 6 à 9, dans lequel l'ensemble d'attributs inclut le terminal de terminaison.

11. Procédé selon une quelconque des revendications 1 à 10, comprenant de :
recevoir un registre de données, dont le contenu d'information indique que l'appel ou une partie de l'appel été déconnecté et
en réponse au contenu d'information, mettre à jour au moins un registre partiel, dans lequel ladite mise à jour inclut de fermer le registre partiel.

12. Procédé selon une quelconque des revendications 1 à 11, dans lequel l'appel est un appel de groupe émis par un terminal d'origine et connecté à une pluralité de terminaux de terminaison et le procédé comprend de :
initialiser un registre partiel individuel pour chacun des terminaux de terminaison et le terminal d'origine,
mettre à jour chacun des registres partiels individuels sur la base des données d'événements relatives au terminal associé,
fermer les registres partiels individuels en réponse à des données d'événements indiquant que le terminal associé est déconnecté et
construire au moins un CDR pour chacun des terminaux de terminaison et du terminal d'origine sur la base du registre partiel fermé associé au terminal.

13. Procédé selon la revendication 12, comprenant de :
initialiser des registres partiels dédiés pour des ressources de réseau distinctes participant à la connexion de l'appel de groupe,
mettre à jour ledit registre partiel dédié sur la base des données d'événements relatives aux ressources de réseau associées,
fermer lesdits registres partiels dédiés en réponse aux données d'événements indiquant que les ressources de réseau associées sont déconnectées de l'appel et
construire des CDRs décrivant les données d'utilisation des ressources de réseau sur la base des registres partiels fermés associés.

14. Procédé selon la revendication 13, comprenant au moins une fois pendant l'appel de groupe d'initialiser un registre partiel dédié à un terminal et un registre partiel dédié à une ressource de réseau sur la base d'un registre de données reçu unique.

15. Procédé selon la revendication 13 ou 14, comprenant au moins une fois pendant l'appel de groupe de mettre à jour un registre partiel dédié à un terminal et un registre partiel dédié à une ressource de réseau sur la base d'un registre de données reçu unique.

16. Système de médiation pour générer des registres de données d'appel CDRs, relatifs à un appel commuté par paquets sur la base des données reçues à partir d'éléments de réseau participant à l'appel, le système comprenant :
une base de données en mémoire,
un collecteur adapté pour recevoir une pluralité de registres de données relatifs à l'appel à partir des éléments de réseau dans lequel chacun des registres de données a un contenu d'information,
un processeur de registre adapté pour analyser au moins une partie du contenu d'information de chacun des registres de données et en réponse au contenu d'informations analysées, initialiser une pluralité de registres partiels existants simultanément contenant une information relative à l'appel dans une base de données en mémoire et mettre à jour la pluralité de registres partiels dans la base de données en mémoire,
dans lequel le processeur de registre est adapté pour mettre à jour au moins deux des registres partiels existants simultanément en réponse à un contenu d'information particulier dans un registre de données unique et
un agrégateur adapté pour construire les CDRs sur la base de l'information dans les registres partiels,
**caractérisé en ce que** le système est adapté pour traiter un appel de groupe émis par un terminal d'origine (T1) et connecté à une pluralité de terminaux de terminaison (T2,T3), dans lequel le système est adapté pour recevoir un registre de données indiquant qu'un premier terminal (T1) émet un nouvel appel dirigé par un groupe de terminaux de terminaison contenant une pluralité de seconds terminaux (T2,T3),
analyser au moins une partie du contenu d'information du registre de données de manière à découvrir les canaux engagés dans l'appel,
initialiser (401,402,403) un registre partiel pour chacun des terminaux de terminaison (T2,T3) et le terminal d'origine (T1), si le registre partiel significatif n'existe pas déjà,
initialiser additionnellement (401,402,403) au moins un registre partiel pour chaque canal (T1,T2,T3) relatif à l'appel si le registre partiel significatif n'existe pas déjà,
mettre à jour (404,405,406) chacun des registres partiels sur la base de données d'événement relatives à un terminal associé à l'événement, si le registre ou les registres partiels significatifs existent déjà,
fermer (409,410,411,412) les registres partiels significatifs en réponse aux données d'événements indiquant qu'un terminal associé à l'événement est déconnecté et
construire au moins un CDR pour chacun des terminaux de terminaison (T2,T3) et le terminal d'origine (T1) sur la base du registre partiel fermé associé au terminal.

17. Système selon la revendication 16, adapté pour recevoir des registres de données, dont le contenu d'information contient un pointeur temporel indiquant un pointeur dans le temps et une indication d'un événement ou un point dans le temps indiqué.

18. Système selon la revendication 16 ou 17, dans lequel l'agrégateur est capable d'utiliser l'information dans une pluralité de registres partiels pour construire un CDR unique.

19. Système selon une quelconque des revendications 16 à 18, comprenant un ensemble d'attributs définis dans le système et adapté pour :
recevoir des registres de données relatifs à un appel à partir des éléments de réseau, dans lequel le contenu d'information de chacun des registres de données définit une valeur pour au moins un attribut dans l'ensemble d'attributs,
analyser au moins une partie du contenu d'information de chacun des registres de données de manière à obtenir la valeur pour chacun desdits au moins un attribut, et
pour chacune desdites valeurs obtenues :
effectuer une vérification dans la base de données en mémoire de manière à trouver un registre partiel dédié à l'attribut de ladite valeur obtenue,
au cas où aucun registre partiel dédié à l'attribut de ladite valeur obtenue n'est trouvé, initialiser un registre partiel dédié à l'attribut de ladite valeur obtenue et
au cas où un registre partiel dédié à l'attribut de ladite valeur obtenue est trouvé, mettre à jour le registre partiel sur la base de la valeur obtenue.

20. Système selon la revendication 19, dans lequel l'ensemble d'attributs inclut au moins deux attributs sélectionnés dans le groupe composé de :
le canal utilisé pour connecter l'appel ou une partie de l'appel,
le commutateur utilisé pour connecter l'appel ou une partie de l'appel,
le terminal d'origine et
le terminal de terminaison.

21. Système selon la revendication 16, adapté pour :
initialiser des registres partiels dédiés pour des ressources de réseau distinctes participant à la connexion de l'appel de groupe,
mettre à jour ledit registre partiel dédié sur la base des données d'événements relatives aux ressources de réseau associées,
fermer lesdits registres partiels dédiés en réponse aux données d'événements indiquant que les ressources de réseau associées sont déconnectées de l'appel et
construire des CDRs décrivant les données d'utilisation des ressources de réseau sur la base des registres partiels fermés associés.

22. Système selon la revendication 21, adapté pour initialiser un registre partiel dédié à un terminal et un registre partiel dédié à une ressource de réseau sur la base d'un registre de données reçu unique.

23. Système selon la revendication 21 ou 22, de adaptés pour mettre à jour un registre partiel dédié à un terminal et un registre partiel dédié à une ressource de réseau sur la base d'un registre de données reçu unique.

24. Produit de programme informatique pour effectuer toutes les étapes d'au moins une des revendications 1 à 15.

25. Système selon une quelconque des revendications 16 à 23 adapté à être utilisé pour la facturation d'appels commutés par paquets.

26. Système selon la revendication 25 adapté à être utilisé pour une d'une facturation prépayée, une facturation post payée et une facturation convergente.

27. Système selon la revendication 25 ou 26, adapté pour déterminer des tarifs sur la base des CDRs générés.
